# EUROPEAN PATENT SPECIFICATION

(11) **EP 3 257 898 B1**
(45) Date of publication and mention of the grant of the patent: **27.11.2019**
(21) Application number: 17175980.6
(22) Date of filing: 14.06.2017
(51) Int. Cl.: C08L 63/00, C08L 33/00

(54) **EPOXY RESIN COMPOSITION**
EPOXIDHARZZUSAMMENSETZUNG
COMPOSITION DE RÉSINE ÉPOXY

(30) Priority: 16.06.2016 JP 2016119531
(43) Date of publication of application: 20.12.2017
(73) Proprietor: Shin-Etsu Chemical Co., Ltd., Chiyoda-ku, Tokyo 100-0004 (JP)
(72) Inventor: KUSHIHARA, Naoyuki, Annaka-shi, Gunma 379-0224 (JP); SUMITA, Kazuaki, Annaka-shi, Gunma 379-0224 (JP)
(74) Representative: Zacco GmbH

(56) References cited:
- EP-A1- 2 161 739

## Description

### [Technical field]

The present invention relates to an epoxy resin composition containing a particular liquid acrylic resin that is highly compatible with epoxy resins.

### [Background art]

In recent years, electronic devices such as mobile phones, smartphones, ultraslim liquid crystal or plasma TVs and lightweight laptop computers, have become increasingly reduced in size in the field of semiconductor-related materials. The electronic parts used in these devices tend to, for example, be integrated and packaged in a highly dense manner. Therefore, it is required that a resin material used in these electronic parts have a lower expansibility and elastic modulus in terms of stress.

Although epoxy resins that have been widely used for electronic parts purpose exhibit properties such as a high heat resistance and a high adhesion to a base material, they have a drawback of being hard and brittle.

Then, studies have been made on lowering the elastic modulus i.e. stress of a resin by adding to an epoxy resin composition an acrylic rubber, a silicone rubber and/or a butadiene rubber as rubber components (e.g. Patent documents 1 and 2). However, there has been a problem that a desired property or properties may not be fully achieved as the rubber particles agglutinate together after directly adding a powdered rubber component(s) to the epoxy resin.

Further, studies have also been made on lowering the stress of a composition by adding a solvent-based acrylic resin (e.g. Patent document 3). However, one drawback has been that a step of removing a solvent is required as a result of using a solvent-based acrylic resin. Another drawback has been that since an encapsulation resin layer needs to have a certain thickness for encapsulation purpose, the solvent will fail to be completely removed in a way such that a part of it will remain to impair an adhesion force.

### [Prior art document]

### [Patent document]

[Patent document 1] JP-A-2014-095063
[Patent document 2] JP-A-2014-028932
[Patent document 3] JP-A-2016-006205

Further, EP 2 161 739 discloses an adhesive film formed of a resin composition containing an epoxy resin, an acrylic resin, and an acrylic oligomer having a weight average molecular weight of 6,000 or less.

### [Summary of the invention]

### [Problem to solved by the invention]

Thus, it is an object of the invention to provide an epoxy resin composition capable of exhibiting a lower stress without sacrificing a high heat resistance and a high adhesiveness to a base material that are inherent to epoxy resins.

### [Means to solve the problem]

In view of the above situations, the inventors of the invention diligently conducted a series of studies and have completed the invention as follows. That is, the inventors have found that the following epoxy resin composition is able to achieve the aforementioned objectives.

Specifically, the present invention provides the following epoxy resin composition.
[1] An epoxy resin composition comprising:
   (A) an epoxy resin;
   (B) an epoxy resin curing agent; and
   (C) a liquid acrylic resin, wherein
   said epoxy resin (A) is at least one liquid epoxy resin selected from the group consisting of a liquid bisphenol A-type epoxy resin, a liquid bisphenol F-type epoxy resin, a phenol novolac-type epoxy resin, a liquid naphthalene-type epoxy resin, a liquid aminophenol-type epoxy resin, a liquid hydrogenated bisphenol-type epoxy resin, a liquid alicyclic epoxy resin, a liquid alcohol ether-type epoxy resin, a liquid fluorene-type epoxy resin, and a diclycidyl ether compound of multifunctional phenols, and
   said liquid acrylic resin (C) exhibits a weight-average molecular weight (Mw) of 2,000 to 20,000, a reactive functional group equivalent of 400 to 10,000 g/eq per one molecule, and a solvent content of not higher than 1% by mass.
[2] The epoxy resin composition according to [1], wherein said liquid acrylic resin (C) has at least one reactive functional group selected from an epoxy group, a hydroxyl group, an alkoxy group, a carboxy group and a carboxylic acid anhydride group.
[3] The epoxy resin composition according to any one of [1] to [2], wherein said liquid acrylic resin (C) exhibits a viscosity of 100 mPa·s to 500 Pa·s when measured at 25°C in accordance with a method described in JIS Z8803:2011.

### [Effects of the invention]

The resin composition of the invention employs an acrylic resin that is highly compatible with epoxy resins and contains a solvent at a low ratio. Thus, the resin composition of the invention is able to exhibit a lower elastic modulus without impairing an adhesion force thereof.

### [Mode for carrying out the invention]

The epoxy resin composition of the invention is described in detail hereunder.

### (A) Epoxy resin

An epoxy resin (A) is a main component of the invention..

Examples of commercially available epoxy resin as the component (A) include liquid epoxy resins such as a bisphenol A-type epoxy resin; a bisphenol F-type epoxy resin; a bisphenol S-type epoxy resin; a phenol novolac-type epoxy resin; a cresol novolac-type epoxy resin; a bisphenol A novolac-type epoxy resin; a bisphenol F novolac-type epoxy resin; a stilbene-type epoxy resin; a triazine skeleton-containing epoxy resin; a fluorene skeleton-containing epoxy resin; a trisphenol methane-type epoxy resin; a biphenyl-type epoxy resin; a xylylene-type epoxy resin; a biphenyl aralkyl-type epoxy resin; a naphthalene-type epoxy resin; a dicyclopentadiene-type epoxy resin; an aminophenol-type epoxy resin; a hydrogenated bisphenol-type epoxy resin; an alicyclic epoxy resin; and an alcohol ether-type epoxy resin. Examples of epoxy resin also include diglycidyl ether compounds of polycyclic aromatics such as multifunctional phenols and anthracene. Examples of epoxy resin may further include phosphorus-containing epoxy resins obtained by introducing phosphorus compounds into the aforementioned examples. Any one of the above examples if used as the component (A) may be used singularly, or two or more of them may be mixed and used in combination.

It is preferred that the epoxy resin (A) be contained in the composition of the invention by an amount of 30 to 70% by mass, more preferably 30 to 60% by mass, and particularly preferably 35 to 60% by mass.

An epoxy resin curing agent as a component (B) may simply be that capable of curing the epoxy resin (A). Examples of such epoxy resin curing agent (B) include an amine-based curing agent, a phenol-based curing agent and an acid anhydride-based curing agent.

Examples of the abovementioned amine-based curing agent include aromatic diaminodiphenylmethane compounds such as 3,3'-diethyl-4,4'-diaminodiphenylmethane, 3,3',5,5'-tetramethyl-4,4'-diaminodiphenylmethane and 3,3',5,5'-tetraethyl-4,4'-diaminodiphenylmethane; 2,4-diaminotoluene; 1,4-diaminobenzene; and 1,3-diaminobenzene. Any of these amine-based curing agents may be used singularly, or two or more of them may be used in combination.

It is preferred that a ratio of all the amino groups in such amine-based curing agent(s) to the epoxy groups in the component (A) be 0.7 to 1.2, more preferably 0.7 to 1.1, or even more preferably 0.85 to 1.05. When this ratio is lower than 0.7, unreacted epoxy groups may remain in a way such that a glass-transition temperature of a cured product may decrease, and that an adhesion may be impaired. Meanwhile, when this ratio is higher than 1.2, the cured product may become hard and brittle in a way such that cracks may occur at the time of performing reflow or a temperature cycle test.

Examples of the abovementioned phenol-based curing agent include a phenol novolac resin, a naphthalene ring-containing phenolic resin, an aralkyl-type phenolic resin, a triphenolalkane-type phenolic resin, a biphenyl skeleton-containing aralkyl-type phenolic resin, a biphenyl-type phenolic resin, an alicyclic phenolic resin, a heterocyclic phenolic resin, a naphthalene ring-containing phenolic resin, a resorcinol-type phenolic resin, an allyl group-containing phenolic resin, and a bisphenol-type phenolic resin such as a bisphenol A-type resin and a bisphenol F-type resin. Here, any one of these phenol-based curing agents may be used singularly, or two or more of them may be used in combination.

When the phenolic resin(s) are used as the curing agent, it is preferred that a ratio of the phenolic hydroxyl groups in the curing agent to the epoxy groups in the component (A) be 0.5 to 1.5, more preferably 0.8 to 1.2.

Examples of the abovementioned acid anhydride-based curing agent include 3,4-dimethyl-6-(2-methyl-1-propenyl)-1,2,3,6-tetrahydrophthalic anhydride; 1-isopropyl-4-methyl-bicyclo [2.2.2] oct-5-ene-2,3-dicarboxylic anhydride; methyltetrahydrophthalic anhydride; methylhexahydrophthalic anhydride; hexahydrophthalic anhydride; methylhimic anhydride; pyromellitic dianhydride; maleated allo-ocimene (i.e. Diels-Alder reaction adduct of maleic anhydride and alloocimene); benzophenonetetracarboxylic dianhydride; diphenyl-3,3',4,4'-tetracarboxylic dianhydride; (3,4-dicarboxyphenyl) ether dianhydride; bis (3,4-dicarboxyphenyl) methane dianhydride; and 2,2-bis (3,4-dicarboxyphenyl) propane dianhydride. Any one of these acid anhydride-based curing agents may be used singularly, or two or more of them may be used in combination.

When the acid anhydride-based curing agent(s) are used, it is preferred that a molar ratio of the acid anhydride groups (-CO-O-CO-) in the curing agent to the epoxy groups in the component (A) be 0.5 to 1.5, more preferably 0.8 to 1.2. When this ratio is lower than 0.5, unreacted epoxy groups may remain in a way such that the glass-transition temperature of the cured product may decrease, and even the adhesion may be impaired. Further, when such ratio is higher than 1.5, the cured product may become hard and brittle in a way such that cracks may occur at the time of performing reflow or a temperature cycle test.

### (C) Liquid acrylic resin

The weight-average molecular weight of a liquid acrylic resin as a component (C) is 2,000 to 20,000, preferably 2,000 to 9,000, in terms of polystyrene. When this weight-average molecular weight is below such lower limit, it may be difficult to achieve the effects of lowering the elasticity of the cured product and improving the crack resistance thereof. Also, when this weight-average molecular weight is below such lower limit, reactive functional groups may not be introduced in the acrylic resin, which will result in an insufficient reaction of the liquid acrylic resin as the component (C) with other components and impair reliability accordingly. Meanwhile, when this weight-average molecular weight is greater than 20,000, a compatibility of the liquid acrylic resin (C) to the epoxy resin may be significantly impaired. In the present invention, the weight-average molecular weight refers to a value measured under the following conditions.

### GPC measurement condition

Developing solvent: Tetrahydrofuran
Flow rate: 0.6 mL/min
Column: TSK Guardcolumn Super H-L
   TSKgel Super H4000 (6.0 mmI.D. × 15 cm × 1)
   TSKgel Super H3000 (6.0 mmI.D. × 15 cm × 1)
   TSKgel Super H2000 (6.0 mmI.D. × 15 cm × 2)
   (all produced by TOSOH CORPORATION)
Column temperature: 40°C
Sample injection volume: 20 µL (Sample concentration: 0.5% by mass-tetrahydrofuran solution)
Detector: Differential refractometer (RI)

It is preferred that the liquid acrylic resin as the component (C) be that having at least one reactive functional group selected from an epoxy group, a hydroxyl group, an alkoxy group, a carboxy group and a carboxylic acid anhydride group.

The liquid acrylic resin as the component (C) is obtained by either polymerizing a monomer mixture having a reactive functional group-containing acrylic monomer and a styrene monomer; or polymerizing a monomer mixture having a reactive functional group-containing acrylic monomer, a styrene monomer and other vinyl monomers.

The above reactive functional group-containing acrylic monomer may be an epoxy group-containing acrylic monomer, specific examples of which include glycidyl (meth)acrylate; (meth)acrylate ester having a cyclohexene oxide structure; and (meth)acrylic glycidyl ether. Here, the highly reactive glycidyl (meth)acrylate is preferred as the epoxy group-containing acrylic monomer. Other examples of the reactive functional group-containing acrylic monomer include alkoxy group-containing acrylic monomers such as alkoxyalkyl ester (meth)acrylate (e.g. methoxyethyl (meth)acrylate); and hydroxyl group-containing acrylic monomer such as hydroxyalkyl ester (meth)acrylate.

The styrene monomer may, for example, be styrene or α-methylstyrene.

Examples of other vinyl monomers include alkyl (meth)acrylate esters containing alkyl groups having 1 to 22 carbon atoms, such as methyl (meth)acrylate, ethyl (meth)acrylate, propyl (meth)acrylate, butyl (meth)acrylate, 2-ethylhexyl (meth)acrylate, cyclohexyl (meth)acrylate and stearyl (meth)acrylate; polyalkylene glycol (meth)acrylate ester; dialkylaminoalkyl (meth)acrylate ester; benzyl (meth)acrylate ester; phenoxyalkyl (meth)acrylate ester; isobornyl (meth)acrylate ester; and alkoxysilylalkyl (meth)acrylate ester. Further, other examples of the above vinyl monomers include (meth)acrylamide; (meth)acrylic dialkylamide; vinyl esters such as vinyl acetate; vinyl ethers; an aromatic vinyl monomer of (meth)allyl ether; and an α-olefin monomer such as ethylene and propylene.

A reactive functional group equivalent of the liquid acrylic resin (C) per one molecule is 400 to 10,000 g/eq, preferably 450 to 5,000 g/eq, more preferably 500 to 3,000 g/eq. When this reactive functional group equivalent is smaller than 400 g/eq, a crosslinking density of the cured product will become extremely high to the extent that it may be difficult to achieve the desired effect of lowering elasticity. Further, when this functional group equivalent is greater than 10,000 g/eq, reactivity will be impaired in a way such that unreacted resins may remain in the system.

Moreover, a solvent content of the liquid acrylic resin (C) is not higher than 1% by mass, preferably 0.1 to 0.5% by mass. A solvent content of greater than 1% by mass is not preferable, because it will lead to void formation during the course of curing. Examples of a solvent that can be contained in the liquid acrylic resin (C) include methylethylketone, toluene, cyclohexanone and cyclopentanone.

In addition, it is preferred that the liquid acrylic resin (C) exhibit a viscosity of 100 mPa·s to 500 Pa·s, more preferably 1,000 mPa·s to 50 Pa·s, when measured by a method described in JIS Z8803:2011 at 25°C. A viscosity within such ranges is preferable, because the liquid acrylic resin (C) will become more easily compatible with the epoxy resin and the epoxy resin curing agent.

It is preferred that the liquid acrylic resin (C) be contained in the composition of the invention by an amount of 5 to 50% by mass, more preferably 5 to 30% by mass, or even more preferably 10 to 30% by mass.

### (D) Other additives

The epoxy resin composition of the invention can be obtained by combining the given amounts of the components (A), (B) and (C). However, an other additive(s) as a component (D) may also be added to the composition of the invention without impairing the objectives and effects of the invention. Examples of such additive(s) include an inorganic filler, a curing accelerator, a polymerization initiator, a mold release agent, a flame retardant, an ion trapping agent, an antioxidant, an adhesion imparting agent, a low stress agent, a coloring agent and a coupling agent.

The inorganic filler is added to reduce the thermal expansion rate of the cured product of the epoxy resin composition, and improve the moisture resistance reliability thereof. Examples of such inorganic filler include silicas such as a molten silica, a crystalline silica and cristobalite; alumina; silicon nitride; aluminum nitride; boron nitride; titanium oxide; glass fibers; and magnesium oxide. The average particle diameters and shapes of these fillers may be selected based on the intended use. Particularly, spherical alumina, spherical molten silica, glass fibers and the like are preferred.

There are no particular restrictions on the abovementioned curing accelerator, as long as it is capable of promoting the curing reaction of the epoxy resin composition. Examples of such curing accelerator include phosphorus compounds such as triphenylphosphine, tributylphosphine, tri (p-methylphenyl) phosphine, tri (nonylphenyl) phosphine, triphenylphosphine·triphenylborane and tetraphenylphosphine·tetraphenylborate; tertiary amine compounds such as triethylamine, benzyldimethylamine, α-methylbenzyldimethylamine and 1,8-diazabicyclo [5.4.0] undecene-7; and imidazole compounds such as 2-methylimidazole, 2-ethyl 4-methylimidazole, 2-phenylimidazole and 2-phenyl-4-methylimidazole.

The mold release agent is added to improve a mold releasability from a mold, and any known mold release agent can be used. Examples of such mold release agent include a carnauba wax; a rice wax; a candelilla wax; polyethylene; a polyethylene oxide; polypropylene; a montanic acid; a montan wax as an ester compound of a montanic acid and a saturated alcohol (e.g. 2-(2-hydroxyethylamino) ethanol, ethylene glycol and glycerin); a stearic acid; a stearic acid ester; and a stearic acid amide.

The flame retardant is added to impart a flame retardance. There are no particular restrictions on such flame retardant, and any known flame retardant may be used. Examples of such flame retardant include a phosphazene compound, a silicone compound, a zinc molybdate-supported talc, a zinc molybdate-supported zinc oxide, an aluminum hydroxide, a magnesium hydroxide and a molybdenum oxide.

The ion trapping agent is added to trap the ion impurities contained in the epoxy resin composition, and avoid a thermal degradation and a moisture absorption degradation. There are no particular restrictions on such ion trapping agent, and any known ion trapping agent may be used. Examples of such ion trapping agent include hydrotalcites, a bismuth hydroxide compound and rare-earth oxides.

Though depending on the intended use of the epoxy resin composition, it is preferred that the component (D) be contained in the whole epoxy resin composition by an amount of 10 to 90% by mass.

### Production method of epoxy resin composition

The epoxy resin composition of the invention may, for example, be produced by the following method.

For example, a mixture of the components (A), (B) and (C) is obtained by simultaneously or separately mixing, stirring, melting and/or dispersing the epoxy resin (A), the epoxy resin curing agent (B) and the liquid acrylic resin (C) while performing a heating treatment if necessary. At that time, at least one of other additives (D) such as the inorganic filler, the curing accelerator, the mold release agent, the flame retardant and the ion trapping agent, may be added to the mixture of the components (A), (B) and (C). Each of the components (A) to (D) may include only one kind of them, or two or more kinds of them.

The mixture can be obtained by performing stirring, melting, mixing and dispersion while carrying out a heating treatment if necessary.

There are no particular restrictions on a device(s) for performing mixing, stirring, dispersion or the like. However, examples of such device(s) include a kneader equipped with a stirring and heating devices, a triple-roll mill, a ball mill, a planetary mixer and a bead mill. These devices can also be appropriately used in combination.

### Working example

The present invention is described in greater detail hereunder with reference to working and comparative examples.

### Working examples 1 to 8; Comparative examples 1 to 6

A planetary mixer was used to mix together all the below components of the amounts shown in Table 1 at 25°C, followed by using a triple-roll mill to knead and mix a mixture thus prepared so as to obtain the epoxy resin composition.

In Table 1, the amounts of the components are expressed as parts by mass. A molecular weight refers to the weight-average molecular weight (Mw) measured by the aforementioned method.

Each composition prepared was evaluated by the later-described evaluation methods. The evaluation results thereof are shown in Table 1.

### (A) Epoxy resin

(A1) Bisphenol A-type epoxy resin (EPIKOTE 828 by Mitsubishi Chemical Corporation)
(A2) Aminophenol-type trifunctional epoxy resin (jER630 by Mitsubishi Chemical Corporation)

### (B) Epoxy resin curing agent

(B1) Allylphenol-type phenolic resin (MEH-8000H by MEIWA PLASTIC INDUSTRIES, LTD.)
(B2) Acid anhydride curing agent (RIKACID MH by New Japan Chemical Co., Ltd.)
(B3) 3,3'-diethyl-4,4'-diaminodiphenylmethane (KAYAHARD AA by Nippon Kayaku Co., Ltd.)

### (C)

### Liquid acrylic resin

(C1) Epoxy group-containing acrylic resin (UG-4010 by Toagosei Co., Ltd; molecular weight 2,900; viscosity 3,700 mPa·s; epoxy equivalent 1,380 g/eq; solvent content 0.5% by mass)
(C2) Carboxyl group-containing acrylic resin (CB3060 by Soken Chemical & Engineering Co., Ltd.; molecular weight 3,000; viscosity 1,000 mPa·s; carboxy equivalent 1,500 g/eq; solvent content 0.5% by mass)
(C3) Hydroxyl group-containing acrylic resin (UT-1001 by Soken Chemical & Engineering Co., Ltd.; molecular weight 3,500; viscosity 8,000 mPa·s; hydroxy equivalent 1,400 g/eq; solvent content 0.5% by mass)
(C4) Epoxy group-containing acrylic resin (SG-P3 by Nagase ChemteX Corporation; molecular weight 850,000; viscosity 6,000 mPa·s; epoxy equivalent 4,800 g/eq; solvent content 85% by mass)

### Particulate acrylic resin

(C5) Epoxy group-modified acrylic resin with average particle diameter of 2.0 µm (F-301 by AICA Kogyo Co., Ltd.)
(C6) Acrylic resin with average particle diameter of 2.0 µm (molecular weight 300,000; F-320 by AICA Kogyo Co., Ltd.)

### (D) Other components

(Dl): 2-ethyl-4-methylimidazole (by SHIKOKU CHEMICALS CORPORATION)

### Evaluation

In working examples 1 to 8; and comparative examples 1 to 6, specimens to be evaluated were prepared by performing molding at 100°C for an hour, and then at 150°C for another four hours.

### (1) Viscosity

An E-type viscometer was used to measure a viscosity value of each composition two minutes after setting the same, at the measurement temperature of 25°C and in accordance with the method described in JIS Z8803:2011.

### (2) Bending elastic modulus, bending strength and deflection amount

A bending elastic modulus, a bending strength and a deflection amount of each cured product prepared under the above curing conditions were measured in accordance with JIS K6911:2006.

### (3) Water absorption rate

A disk-shaped cured product prepared under the above curing conditions and having a diameter of 50 mm and a thickness of 3 mm was placed into a pressure cooker in which the disk-shaped cured product was exposed to a saturated water vapor of 2.03×10⁵ Pa at 121°C for 96 hours. Here, a water absorption rate refers to a rate of increase in the weight of the disk-shaped cured product that was observed after such 96 hours.

### (4) Adhesion force measurement

Specimens for adhesion test were prepared as follows. That is, the epoxy resin composition of the invention was applied to a 10×10 mm Cu lead frame, followed by mounting a silicon chip thereon, and then curing the epoxy resin composition under the abovementioned curing conditions. A bond tester, DAGE-SERIES-4000PXY (by Nordson Advanced Technology (Japan) K.K.) was used to measure a shear adhesion force of each specimen at room temperature (25°C). Here, an adhesion area between the lead frame and the resin was 10 mm² in each specimen.

**Table 1**

| | | Working example | | | | | | | | Comparative example | | | | | |
|---|---|---|---|---|---|---|---|---|---|---|---|---|---|---|---|
| | | 1 | 2 | 3 | 4 | 5 | 6 | 7 | 8 | 1 | 2 | 3 | 4 | 5 | 6 |
| Epoxy resin(A1) | | 51.0 | 51.0 | 51.0 | 47.1 | 67.4 | | 41.8 | 36.5 | 51.0 | 51.0 | 51.0 | | 56.7 | 52.4 |
| Epoxy resin(A2) | | | | | | | 33.2 | | | | | | | | |
| Curing agent(B1) | | 38.0 | 38.0 | 38.0 | | | | | | 38.0 | 38.0 | 38.0 | 89.0 | 42.3 | |
| Curing agent(B2) | | | | | 41.9 | | 55.8 | 37.2 | 32.5 | | | | | | 46.6 |
| Curing agent(B3) | | | | | | 22.6 | | | | | | | | | |
| Liquid acrylic resin(C1) | | 10.0 | | | | 10.0 | 10.0 | 20.0 | 30.0 | | | | 10.0 | | |
| Liquid acrylic resin(C2) | | | 10.0 | | 10.0 | | | | | | | | | | |
| Liquid acrylic resin(C3) | | | | 10.0 | | | | | | | | | | | |
| Liquid acrylic resin(C4) | | | | | | | | | | 66.7 | | | | | |
| Particulate acrylic resin(C5) | | | | | | | | | | | 10.0 | | | | |
| Particulate acrylic resin(C6) | | | | | | | | | | | | 10.0 | | | |
| Curing accelerator(D1) | | 1.0 | 1.0 | 1.0 | 1.0 | | 1.0 | 1.0 | 1.0 | 1.0 | 1.0 | 1.0 | 1.0 | 1.0 | 1.0 |
| Reactive group in component(B) / Epoxy group in component (A) | | 1.0 | 1.0 | 1.0 | 1.0 | 1.0 | 1.0 | 1.0 | 1.0 | 1.0 | 1.0 | 1.0 | - | 1.0 | 1.0 |
| Viscosity | Pa*s | 40 | 40 | 40 | 0.6 | 11 | 0.3 | 0.3 | 0.2 | 35 | 290 | 260 | 40 | 52 | 1.2 |
| Bending elastic modulus | MPa | 2200 | 2300 | 1900 | 2300 | 2100 | 2100 | 1700 | 1200 | Uncured | 2700 | 2600 | Uncured | 2900 | 3200 |
| Bending strength | MPa | 110 | 121 | 100 | 130 | 110 | 150 | 110 | 110 | | 90 | 90 | | 90 | 100 |
| Deflection amount | mm | 24 | 21 | 26 | 16 | 13 | 15 | 18 | 20 | | 17 | 18 | | 16 | 10 |
| Water absorption rate | % | 1.6 | 1.8 | 1.6 | 1.6 | 2.7 | 2.2 | 2.3 | 2.5 | | 2.4 | 3.0 | | 1.6 | 2.1 |
| Adhesion force to Cu | MPa | 24 | 23 | 26 | 31 | 33 | 26 | 23 | 23 | | 16 | 15 | | 24 | 25 |

## Claims

1. An epoxy resin composition comprising:
(A) an epoxy resin;
(B) an epoxy resin curing agent; and
(C) a liquid acrylic resin,
**characterized in that** said epoxy resin (A) is at least one liquid epoxy resin selected from the group consisting of a liquid bisphenol A-type epoxy resin, a liquid bisphenol F-type epoxy resin, a phenol novolac-type epoxy resin, a liquid naphthalene-type epoxy resin, a liquid aminophenol-type epoxy resin, a liquid hydrogenated bisphenol-type epoxy resin, a liquid alicyclic epoxy resin, a liquid alcohol ether-type epoxy resin, a liquid fluorene-type epoxy resin, and a diclycidyl ether compound of multifunctional phenols, and
that said liquid acrylic resin (C) exhibits a weight-average molecular weight (Mw) of 2,000 to 20,000, a reactive functional group equivalent of 400 to 10,000 g/eq per one molecule, and a solvent content of not higher than 1% by mass.

2. The epoxy resin composition according to claim 1, wherein said liquid acrylic resin (C) has at least one reactive functional group selected from an epoxy group, a hydroxyl group, an alkoxy group, a carboxy group and a carboxylic acid anhydride group.

3. The epoxy resin composition according to claim 1 or claim 2, wherein said liquid acrylic resin (C) exhibits a viscosity of 100 mPa·s to 500 Pa·s when measured at 25°C in accordance with a method described in JIS Z8803:2011.

## Patentansprüche

1. Epoxidharzzusammensetzung umfassend:
(A) ein Epoxidharz;
(B) ein Epoxidharzhärtungsmittel; und
(C) ein flüssiges Acrylharz,
**dadurch gekennzeichnet, dass** das Epoxidharz (A) mindestens ein flüssiges Epoxidharz ist, das aus der Gruppe ausgewählt ist, die aus einem flüssigen Epoxidharz vom Bisphenol-A-Typ, einem flüssigen Epoxidharz vom Bisphenol-F-Typ, einem Epoxidharz vom Phenol-Novolak-Typ, einem flüssigen Epoxidharz vom Naphthalen-Typ, einem flüssigen Epoxidharz vom Aminophenol-Typ, einem flüssigen hydrierten Epoxidharz vom Bisphenol-Typ, einem flüssigen alizyklischen Epoxidharz, einem flüssigen Epoxidharz vom Alkoholether-Typ, einem flüssigen Epoxidharz vom Fluoren-Typ und einer Diclycidyletherverbindung von multifunktionalen Phenolen besteht, und
dass das flüssige Acrylharz (C) ein gewichtsmittleres Molekulargewicht (Mw) von 2.000 bis 20.000, ein reaktives funktionelles Gruppenäquivalent von 400 bis 10.000 g/Äq pro ein Molekül und einen Lösungsmittelgehalt von nicht mehr als 1 Massen-% aufweist.

2. Epoxidharzzusammensetzung nach Anspruch 1, wobei das flüssige Acrylharz (C) mindestens eine, aus einer Epoxidgruppe, einer Hydroxylgruppe, einer Alkoxygruppe, einer Carboxygruppe und einer Carbonsäure-Anhydridgruppe ausgewählte, reaktive funktionelle Gruppe aufweist.

3. Epoxidharzzusammensetzung nach Anspruch 1 oder Anspruch 2, wobei das flüssige Acrylharz (C) eine Viskosität von 100 mPa·s bis 500 Pa·s aufweist, wenn es bei 25 °C gemäß einem in JIS Z8803:2011 beschriebenen Verfahren gemessen wird.

## Revendications

1. Composition de résine époxy comprenant :
(A) une résine époxy;
(B) un agent de durcissement de résine époxy; et
(C) une résine acrylique liquide,
**caractérisée en ce que** ladite résine époxy (A) est au moins une résine époxy liquide choisie dans le groupe constitué d'une résine époxy liquide de type bisphénol A, d'une résine époxy liquide de type bisphénol F, d'une résine époxy de type phénol novolac, d'une résine époxy de type naphtalène liquide, d'une résine époxy de type aminophénol liquide, d'une résine époxy de type bisphénol hydrogénée liquide, d'une résine époxy alicyclique liquide, d'une résine époxy de type éther d'alcool liquide, d'une résine époxy de type fluorène liquide et d'un composé d'éther diclycidyle de phénols multifonctionnels, et
**que** ladite résine acrylique liquide (C) présente un poids moléculaire moyen en poids (Mw) de 2.000 à 20.000, un équivalent de groupe fonctionnel réactif de 400 à 10.000 g / éq pour une molécule, et teneur en solvant non supérieure à 1% en masse.

2. Composition de résine époxy selon la revendication 1, dans laquelle ladite résine acrylique liquide (C) a au moins un groupe fonctionnel réactif choisi parmi un groupe époxy, un groupe hydroxyle, un groupe alcoxy, un groupe carboxy et un groupe anhydride d'acide carboxylique.

3. Composition de résine époxy selon la revendication 1 ou la revendication 2, dans laquelle ladite résine acrylique liquide (C) présente une viscosité de 100 mPa·s à 500 Pa·s lorsqu'elle est mesurée à 25°C selon un procédé décrit dans JIS Z8803:2011.
